# EUROPÄISCHE PATENTANMELDUNG

(11) **EP 2 499 912 A1**
(43) Veröffentlichungstag der Anmeldung: **19.09.2012**
(21) Anmeldenummer: 11157619.5
(22) Anmeldetag: 10.03.2011
(51) Int. Cl.: A01N 47/40, A01N 25/00, A01P 5/00, A01P 7/00, A01P 9/00, A01N 43/40, A01N 43/78, A01N 43/653, A01N 43/713, A01N 57/32

(54) **Verwendung von N'-Cyano-N-halogenalkyl-imidamid-Derivaten zur Bekämpfung von tierischen Schädlingen**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft die Verwendung von Halogen-substituierten Verbindungen der Formel (I) 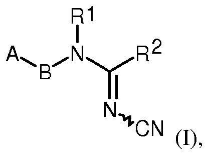 in welcher A, B, R¹ und R² die in der Beschreibung angegebenen Bedeutungen haben, zur Bekämpfung von Insekten und/oder Spinnmilben und/oder Mollusken durch Angiessen, Bodenmischung, Furchenbehandlung, Tröpfchenapplikation, in hydroponischen Systemen, durch Pflanzlochbehandlung, Boden-, Stamm- oder Blüteninjektion, Tauchapplikation, Floating- oder Saatboxapplikation oder durch Behandlung von Saatgut.

## Beschreibung

Die vorliegende Erfindung betrifft die Verwendung von bestimmten Halogen-substituierten Verbindungen zur Bekämpfung von Insekten und/oder Spinnmilben und/oder Nematoden und/oder Mollusken durch Angiessen, Bodenmischung, Furchenbehandlung, Tröpfchenapplikation, in hydroponischen Systemen, Pflanzlochbehandlung, Boden-, Stamm- oder Blüteninjektion, Tauchapplikation, Floating- oder Saatboxapplikation oder durch Behandlung von Saatgut.

Die hier zur Verwendung kommenden Halogen-substituierten Verbindungen der weiter unten beschriebenen Formel (I) sind aus der WO 2008/009360 A2 bekannt. Dort wird auch ihre Verwendung zur Bekämpfung tierischer Schädlinge, beispielsweise Arthropoden, beschrieben.

Überraschenderweise wurde nun gefunden, dass diese Halogen-substituierten Verbindungen gut zur Bekämpfung von Insekten und/oder Spinnmilben und/oder Nematoden durch Angiessen auf den Boden (in Fachkreisen als "Drenching" bekannt), Bodenmischung, Furchenbehandlung, Tröpfchenapplikation auf den Boden (auch als "Drip application" bezeichnet), in hydroponischen Systemen, durch Pflanzlochbehandlung, nach Eintauchen von Wurzelwerk, Knollen oder Zwiebeln (auch als "Dip application" bezeichnet), durch hydroponische Systeme oder Bodeninjektion (auch als "Soil Injection" bezeichnet) ebenso wie Stamm- oder Blüteninjektion, Tauchapplikation, Floating- oder Saatboxapplikation oder durch Behandlung von Saatgut geeignet sind.

Die vorliegende Erfindung betrifft demnach die Verwendung von Halogen-substituierten Verbindungen der Formel (I) zur Bekämpfung von Insekten und/oder Spinnmilben und/oder Nematoden und/oder Mollusken durch Angiessen auf den Boden, Einmischen in das Substrat, Furchenbehandlung, in hydroponischen und Bewässerungssystemen als Tröpfchenapplikation auf den Boden, Pflanzlochbehandlung oder als Tauchapplikation von zum Beispiel Wurzelwerk, Knollen oder Zwiebeln oder durch Boden-, Stamm- und Blüteninjektion und zur Saatgutbehandlung. Weiterhin betrifft die vorliegende Erfindung diese Anwendungsformen auf natürlichen (Erdreich) oder artifiziellen Substraten (z.B. Steinwolle, Glaswolle, Quarzsand, Kiesel, Blähton, Vermiculit) im Freiland oder in geschlossenen Systemen (z.B. Gewächshäuser oder unter Folien-Abdeckung) und in einjährigen (z.B. Ackerkulturen, Gemüse, Gewürzen, Zierpflanzen) oder mehrjährigen Kulturen (z.B. Zitruspflanzen, Obst, tropische Kulturen, Gewürzen, Nüsse, Wein, Koniferen und Zierpflanzen).

Die oben genannten Kulturen sind im Folgenden differenziert und näher spezifiziert. So versteht man unter Ackerkulturen Getreidekulturen, beispielsweise Weizen, Gerste, Roggen, Hafer oder Triticale, aber auch Mais , Baumwolle, Soja, Raps, Rüben, Hirse und Reis.

Unter Gemüse versteht man z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen und Artischocken, aber auch Blattgemüse, beispielsweise Kopfsalat, Chicoreé, Endivien, Kressen, Rauken, Feldsalat, Eisbergsalat, Lauch, Spinat und Mangold, weiterhin Knollen-, Wurzel- und Stängelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel und Knoblauch, ferner Kohlgemüse, wie Blumenkohl, Broccoli, Kohlrabi, Rotkohl, Weißkohl, Grünkohl, Wirsing, Rosenkohl und Chinakohl.

Unter mehrjährigen Kulturen versteht man Zitrus, wie beispielsweise Orangen, Grapefruits, Mandarinen, Zitronen, Limetten, Bitterorangen, Kumquats und Satsumas, aber auch Kernobst, wie beispielsweise Äpfel, Birnen und Quitten und Steinobst, wie beispielsweise Pfirsiche, Nektarinen, Kirschen, Pflaumen, Zwetschgen und Aprikosen, weiterhin Wein, Hopfen, Oliven, Tee und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas und Guaven, außerdem Mandeln und Nüsse wie beispielsweise Haselnüsse, Walnüsse, Pistazien, Cashewnüsse, Paranüsse, Pekannüsse, Butternüsse, Kastanien, Hickorynüsse, Macadamiannüsse und Erdnüsse, darüber hinaus auch Beerenfrüchte wie beispielsweise Johannisbeeren, Stachelbeeren, Himbeeren, Brombeeren, Heidelbeeren, Erdbeeren, Preiselbeeren, Kiwis und Cranberries.

Unter Zierpflanzen versteht man ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amaryllis, Dahlien, Azaleen, Malven, aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Usambaraveilchen, Sonnenblumen und Begonien, ferner z.B. Sträucher und Koniferen wie beispielsweise Ficus, Rhododendron, Fichten, Tannen, Kiefern, Eiben, Wacholder, Pinien und Oleander.

Unter Gewürzen versteht man ein- und mehrjährige Pflanzen wie beispielsweise Anis, Chili, Paprika, Pfeffer, Vanille, Majoran, Thymian, Gewürznelken, Wacholderbeeren, Zimt, Estragon, Koriander, Safran und Ingwer.

Die erfindungsgemäß verwendbaren Halogen-substituierten Verbindungen werden durch die Formel (I) beschrieben 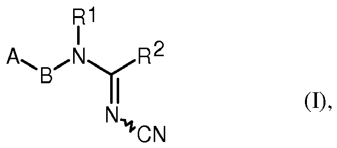 in welcher
- A: für jeweils gegebenenfalls substituiertes Aryl, Heterocyclyl oder Hetaryl steht, welche gegebenenfalls durch Fluor, Chlor, Brom, Iod, Cyano, Nitro, Alkyl (welches gegebenenfalls durch Fluor und/oder Chlor substituiert ist), Alkylthio (welches gegebenenfalls durch Fluor und/oder Chlor substituiert ist), oder Alkylsulfonyl (welches gegebenenfalls durch Fluor und/oder Chlor substituiert ist), substituiert sind,
- R¹: für jeweils halogensubstituiertes C₂-C₄-Alkyl, C₂-C₅-Alkenyl oder C₃-C₅-Cycloalkyl steht,
- R²: für jeweils gegebenenfalls halogensubstituiertes Alkyl oder Cycloalkyl steht und
- B: für gegebenenfalls substituiertes Methylen oder jeweils gegebenenfalls substituiertes Alkylen oder Alkyliden mit jeweils 2 bis 6 Kohlenstoffatomen steht, oder eine Bindung zwischen A und NR¹ bedeutet.

Die Verbindungen der Formel (I) können gegebenenfalls in Abhängigkeit von der Art der Substituenten als geometrische und/oder als optisch Aktive Isomere oder entsprechende Isomerengemische in unterschiedlicher Zusammensetzung vorliegen. Die Erfindung betrifft sowohl die reinen Isomere als auch die Isomerengemische.

Für die erfindungsgemäße Verwendung sind Wirkstoffe der Formel (I) bevorzugt, in denen die Reste die folgenden Bedeutungen annehmen:
- A: steht bevorzugt für Tetrahydrofuryl oder für Pyrid-3-yl, welches gegebenenfalls in 6-Position substituiert ist durch Halogen, C₁-C₄-Alkyl oder C₁-C₄-Halogenalkyl oder für Pyrimidin-5-yl, welches gegebenenfalls in 2-Position substituiert ist durch Halogen oder C₁-C₄-Alkyl oder für 1*H*-Pyrazol-4-yl, welches gegebenenfalls in 1-Position substituiert ist durch C₁-C₄-Alkyl und in 3-Position durch Halogen oder für 1*H*-Pyrazol-5-yl, welches gegebenenfalls in 3-Position substituiert ist durch Halogen oder C₁-C₄-Alkyl oder für Isoxazol-5-yl, welches gegebenenfalls in 3-Position substituiert ist durch Halogen oder C₁-C₄-Alkyl oder für 1,2,4-Oxadiazol-5-yl, welches gegebenenfalls in 3-Position substituiert ist durch Halogen oder C₁-C₄-Alkyl oder für 1-Methyl-1,2,4-triazol-3-yl, 1,2,5-Thiadiazol-3-yl oder für 1,3-Thiazolyl-5-yl, welches gegebenenfalls in 2-Position substituiert ist durch Halogen oder C₁-C₄-Alkyl.
- A: steht auch bevorzugt für einen Rest 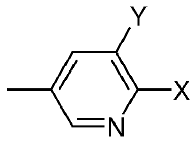 in welchem
X für Halogen, C₁-C₄-Alkyl oder C₁-C₄-Halogenalkyl steht und
Y für Halogen, C₁-C₄-Alkyl, C₁-C₄-Halogenalkyl, C₁-C₄-Halogenalkoxy, Azido oder Cyan steht.
- A: steht auch bevorzugt für einen Rest aus der Reihe 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Iod-6-brom-pyrid-3-yl, 5-Fluor-6-iod-pyrid-3-yl, 5-Chlor-6-iod-pyrid-3-yl, 5-Brom-6-iod-pyrid-3-yl, 5,6-Diiod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl und 5-Difluormethyl-6-iod-pyrid-3-yl.
- A: steht weiterhin bevorzugt für einen Rest 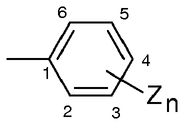 in welchem
n für 2, 3 oder 4 steht und
Z für Fluor, Chlor oder Brom steht.
- R¹: steht bevorzugt für 2,2,2-Trifluorethyl oder 2,2-Difluorethyl.
- R²: steht bevorzugt für jeweils gegebenenfalls durch Fluor, Chlor oder Brom substituiertes Methyl, Ethyl, n-Propyl, Isopropyl, n-Butyl, Isobutyl, sec-Butyl, tert-Butyl, Cyclopropyl oder Cyclobutyl.
- B: steht bevorzugt für -CR³R⁴- oder -H₂C-CR³R⁴-,
worin
R³ und R⁴ unabhängig voneinander für Wasserstoff, für jeweils gegebenenfalls durch Halogen, insbesondere Fluor, substitutiertes Methyl, Ethyl oder C₃-C₆-Cycloalkyl (insbesondere Cyclopropyl) oder für Halogen, insbesondere Fluor, oder für C₁-C₄-Alkoxy-C₁-C₄-alkyl, insbesondere Methoxymethyl, stehen,
oder
R³ und R⁴ gemeinsam mit dem Kohlenstoffatom an dem sie gebunden sind einen 3- bis 6-gliedrigen Kohlenstoffring bilden.

Wenn n für 2 steht, befindet sich ein erster Substituent Z bevorzugt in *ortho-* (2) und der zweite Substituent Z bevorzugt in *para*-Stellung (4), oder ein erster Substituent Z befindet sich bevorzugt in *meta*-Stellung (3) und der zweite Substituent Z befindet sich bevorzugt in *para*-Stellung (4) am Phenylring.

Wenn n für 3 steht, befindet sich ein erster Substituent Z bevorzugt in *ortho-* (2) und der zweite Substituent Z bevorzugt in *para*-Stellung (4) und der dritte Substituent Z bevorzugt in *meta*-Stellung (3) am Phenylring.

Die Substituenten Z können gleich oder verschieden sein.

Für die erfindungsgemäße Verwendung sind Wirkstoffe der Formel (I) besonders bevorzugt, in denen die Reste die folgenden Bedeutungen annehmen:
- A: steht besonders bevorzugt für 6-Chlor-pyrid-3-yl, 6-Brom-pyrid-3-yl, 6-Methyl-pyrid-3-yl, 6-Trifluormethyl-pyrid-3-yl, 2-Methyl-pyrimidin-5-yl, 2-Chlor-pyrimid-5-yl, für 1*H*-Pyrazol-4-yl, welches gegebenenfalls in 1-Position substituiert ist durch Methyl oder Ethyl, und in 3-Position durch Chlor, für 1*H*-Pyrazol-5-yl, 3-Methyl-pyrazol-5-yl, 2-Brom-1,3-thiazol-5-yl, 2-Chlor-1,3-thiazol-5-yl, für Isoxazol-5-yl, welches gegebenenfalls in 3-Position substituiert ist durch Methyl, Ethyl, Chlor oder Brom, 3-Methyl-1,2,4-oxadiazol-5-yl, 1-Methyl-1,2,4-triazol-3-yl oder 1,2,5-Thiadiazol-3-yl.
- A: steht auch besonders bevorzugt für 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom-pyrid-3-yl, 5-Methyl-6-chlor-pyrid-3-yl oder 5-Methyl-6-brom-pyrid-3-yl.
- A: steht auch besonders bevorzugt für einen Rest 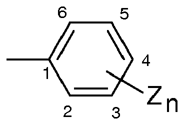
in welchem
- n: für 2 oder 3 steht und
- Z: für Fluor oder Chlor steht.

Als besonders bevorzugte Reste für A seien genannt 2,4-Dihalogen-phenyl, insbesondere 2,4-Dichlor-phenyl, 2-Fluor-4-chlorphenyl, 2-Chlor-4-fluor-phenyl, 2,4-Difluor-phenyl; 3,4-Dihalogen-phenyl, insbesondere 3-Fluor-4-chlor-phenyl, 3,4-Dichlor-phenyl, 3,4-Difluor-phenyl, 3-Chlor-4-fluor-phenyl; 3,4,6-Trihalogen-phenyl, insbesondere 4-Chlor-3,6-difluor-phenyl, 3,4-Dichlor-6-fluor-phenyl, 3,6-Dichlor-4-fluor-phenyl, 3-Chlor-4,6-difluor-phenyl, 4,6-Dichlor-3-fluor-phenyl, 3,4,6-Trichlor-phenyl, 3,4,6-Trifluor-phenyl, 6-Chlor-3,4-difluor-phenyl; 3,4,5-Trihalogen-phenyl, insbesondere 3,4,5-Trichlorphenyl, 3,4-Dichlor-5-fluor-phenyl, 4-Chlor-3,5-difluor-phenyl, 3,4,5-Trifluor-phenyl, 3-Chlor-4,5-difluor-phenyl, 3,5-Dichlor-4-fluor-phenyl; 2,3,4-Trihalogen-phenyl, insbesondere 2,3,4-Trichlor-phenyl, 2-Chlor-3,4-difluor-phenyl, 2,4-Dichlor-3-fluor-phenyl, 2,3-Dichlor-4-fluor-phenyl, 2,3,4-Trifluor-phenyl, 3,4-Dichlor-2-fluor-phenyl, 4-Chlor-2,3-difluor-phenyl.
- R¹: steht besonders bevorzugt für 2,2-Difluorethyl.
- R²: steht besonders bevorzugt für Methyl oder Ethyl.
- B: steht besonders bevorzugt für einen Rest aus der Reihe (B-1) bis (B-9)

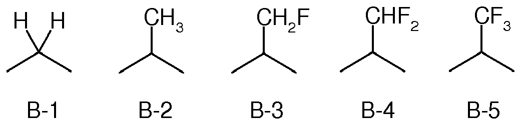

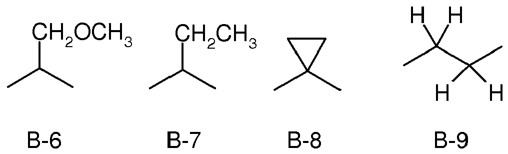

Wenn n für 2 steht, befindet sich ein erster Substituent Z besonders bevorzugt in ortho-Stellung (2) und der zweite Substituent Z besonders bevorzugt in para-Stellung (4) am Phenylring.
- A: steht ganz besonders bevorzugt für einen Rest aus der Reihe 6-Chlor-pyrid-3-yl, 6-Brom-pyrid-3-yl, 2-Methyl-pyrimidin-5-yl, 2-Chlor-pyrimid-5-yl, 3-Methyl-isoxazol-5-yl, 3-Brom-isoxazol-5-yl, 5-Fluor-6-chlor-pyrid-3-yl, 5,6-Dichlor-pyrid-3-yl, 5-Fluor-6-brom-pyrid-3-yl und 2-Chlor-1,3,-thiazol-5-yl.
- R¹: steht ganz besonders bevorzugt für 2,2-Difluorethyl.
- R²: steht ganz besonders bevorzugt für Methyl.
- B: steht ganz besonders bevorzugt für Methylen (-CH₂-).

Für die erfindungsgemäße Verwendung ganz besonders bevorzugt sind die in der folgenden Tabelle aufgeführten Wirkstoffe der Formeln (I-1) bis (I-11)

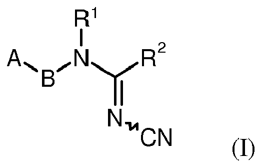

| Bsp.-Nr./Formel | A | B | R¹ | R² |
|---|---|---|---|---|
| I-1 | 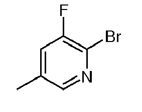 | CH₂ | CH₂CHF₂ | CH₃ |
| I-2 | 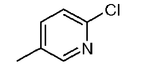 | CH₂ | CH₂CF₃ | CH₃ |
| I-3 | 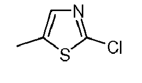 | CH₂ | CH₂CHF₂ | CH₃ |
| I-4 | 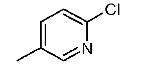 | CH₂ | CH₂CHF₂ | CH₃ |
| I-5 | 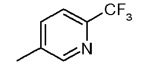 | CH₂ | CH₂CHF₂ | CH₃ |
| I-6 | 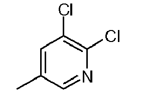 | CH₂ | CH₂CHF₂ | CH₃ |
| I-7 | 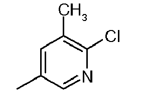 | CH₂ | CH₂CHF₂ | CH₃ |
| I-8 | 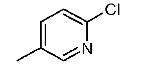 | CH₂ | (CH₂)₂CF₃ | CH₃ |
| I-9 | 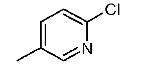 | CH₂ | CH₂CH₂F | CH₃ |
| I-10 | 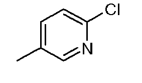 | CH₂ | CH₂CHCIF | CH₃ |
| I-11 | 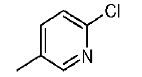 | CH₂ | CH₂CF₂CH₃ | CH₃ |

Unter diesen sei die Verbindung der Formel (I-4) 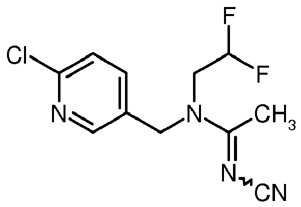 besonders hervorgehoben.

Erfindungsgemäß verwenden lassen sich auch zum Teil neue Kombinationen der Verbindungen der Formel (I) mit anderen Wirkstoffen. Zu diesen anderen Wirkstoffen zählen beispielsweise Insektizide, Nematizide und Fungizide.

Als Insektizide bzw. Nematizide seien Clothianidin, Imidacloprid, Thiamethoxam, Thiacloprid, Acetamiprid, ß-Cyfluthrin, Tefluthrin, Methiocarb, Thiodicarb, (1-(3-Chlorpyridin-2-yl)-*N*-[4-cyan-2-methyl-6-(methylcarbamoyl)phenyl]-3-{[5-(trifluormethyl)-1*H*-tetrazol-1-yl]methyl}-1*H*-pyrazol-5-carboxamid und 1-(3-Chlorpyridin-2-yl)-*N*-[4-cyan-2-methyl-6-(methylcarbamoyl)phenyl]-3-{[5-(trifluormethyl)-2*H*-tetrazol-2-yl]methyl}-1*H*-pyrazol-5-carboxamid), 4-{[(6-chloropyridin-3-yl)methyl](2,2-difluoroethyl)amino}furan-2(5H)-one, 1-{2-fluoro-4-methyl-5-[(2,2,2-trifluorethyl)sulfinyl]phenyl}-3-(trifluoromethyl)-1*H*-1,2,4-triazol-5-amine, Bacillus firmus I-1582, Spinosad, Spinetoram, Abamectin, Flubendiamide, Chlorantraniliprole, Cyantraniliprole, Sulfoxaflor, Flonicamid, Fluopyram, Imicyafos, Fluensulfone, Spirotetramat, Fipronil und Pymetrozine genannt.

Als Fungizide seien Prothioconazole, Penflufen, Trifloxystrobin, Fluoxastrobin, Pencycuron, Fluopyram, Fluxapyroxad, Propamocarb, Fluopicolide, Fenamidone, Carpropamid, Metalaxyl, Mefenoxam, Fludioxonil, Fluquinconazole, Tebuconazole, Triadimenol, Bitertanol, Iprodione, Metominostrobin, Thiram, Propamocarb, Isotianil, Sedaxane, Fluxapyroxad, Pyraclostrobin und Mancozeb genannt.

Insbesondere seien die folgenden Wirkstoffkombinationen Nr. 1 bis 27 genannt, die auch als Zweierkombinationen bezeichnet werden:

| **Wirkstoff-kombination Nr.** | **Verbindung der Formel (I)** | **in Kombination mit** |
|---|---|---|
| 1 | Verbindung der Formel (I-4) | Clothianidin |
| 2 | Verbindung der Formel (I-4) | Imidacloprid |
| 3 | Verbindung der Formel (I-4) | ß-Cyfluthrin |
| 4 | Verbindung der Formel (I-4) | Thiodicarb |
| 5 | Verbindung der Formel (I-4) | (1-(3-Chlorpyridin-2-yl)-*N*-[4-cyan-2-methyl-6-methylcarbamoyl)phenyl]-3-{[5-(trifluor-methyl)-1*H*-tetrazol-1-yl]methyl}-1*H*-pyrazol-5-carboxamid und 1-(3-Chlorpyridin-2-yl)-*N*-[4-cyan-2-methyl-6-(methylcarbamoyl) phenyl]-3-{[5-(trifluormethyl)-2*H*-tetrazol-2-yl]methyl}-1*H*-pyrazol-5-carboxamid) ^{[a]} |
| 6 | Verbindung der Formel (I-4) | *Bacillus_{.} firmus* I - 1582 |
| 7 | Verbindung der Formel (I-4) | Spinetoram |
| 8 | Verbindung der Formel (I-4) | Abamectin |
| 9 | Verbindung der Formel (I-4) | Chlorantraniliprole |
| 10 | Verbindung der Formel (I-4) | Cyantraniliprole |
| 11 | Verbindung der Formel (I-4) | Sulfoxaflor |
| 12 | Verbindung der Formel (I-4) | Flonicamid |
| 13 | Verbindung der Formel (I-4) | Fluopyram |
| 14 | Verbindung der Formel (I-4) | Imicyafos |
| 15 | Verbindung der Formel (I-4) | Fluensulfone |
| 16 | Verbindung der Formel (I-4) | Spirotetramat |
| 17 | Verbindung der Formel (I-4) | Pymetrozine |
| 18 | Verbindung der Formel (I-4) | Thiamethoxam |
| 19 | Verbindung der Formel (I-4) | Thiacloprid |
| 20 | Verbindung der Formel (I-4) | Acetamiprid |
| 21 | Verbindung der Formel (I-4) | Tefluthrin |
| 22 | Verbindung der Formel (I-4) | Methiocarb |
| 23 | Verbindung der Formel (I-4) | 4-{[(6-chloropyridin-3-yl)methyl](2,2-difluoroethyl)amino}furan-2(5*H*)-one |
| 24 | Verbindung der Formel (I-4) | 1-{2-fluoro-4-methyl-5-[(2,2,2-trifluorethyl)sulfinyl]phenyl}-3-(trifluoromethyl)-1*H*-1,2,4-triazol-5-amine |
| 25 | Verbindung der Formel (I-4) | Spinosad |
| 26 | Verbindung der Formel (I-4) | Flubendiamide |
| 27 | Verbindung der Formel (I-4) | Fipronil |

| | | |
|---|---|---|
| ^{[a]} gegebenenfalls als Isomerengemisch vorliegend | | |

Die in der rechten Spalte der Tabelle unter Nr. 5 genannten beiden Verbindungen können jede für sich oder als Isomerengemisch mit der Verbindung der Formel (I-4) kombiniert werden. Jede der Wirkstoffkombinationen Nr. 1 bis 27 kann zusätzlich eines oder mehrere der oben genannten Fungizide enthalten. Besondere Ausführungsformen betreffen jede einzelne der Wirkstoffkombinationen Nr. 1 bis 27, welche zusätzlich genau eines der oben genannten Fungizide enthalten, die resultierenden, drei Wirkstoffe enthaltenden Wirkstoffkombinationen werden auch als Dreierkombinationen (im Fall der Nr. 5 erhält man bei Einsatz eines Isomerengemisches eine Viererkombination) bezeichnet.

Die in der Tabelle aufgeführten Wirkstoffkombinationen Nr. 5, 6, 13, 14, 15 und 24 sind neu und ebenfalls Gegenstand der vorliegenden Erfindung.

Die Halogen-substituierten Verbindungen der Formel (I) und die oben genannten erfindungsgemäß zu verwendenden Wirkstoffkombinationen können gegen eine Vielzahl von tierischen Schädlingen, insbesondere Insekten, Spinnentieren, Helminthen, Nematoden und Mollusken, die in der Landwirtschaft, im Gartenbau, in Forsten und in Gärten und Freizeiteinrichtungen vorkommen, gegen normal sensible und resistente Arten sowie gegen alle oder einzelne Entwicklungsstadien eingesetzt werden. Zu diesen Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Xiphinema spp..

Die oben genannten erfindungsgemäß zu verwendenden Wirkstoffkombinationen, die noch eines oder mehrere Fungizide enthalten können und insbesondere die Dreierkombinationen lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans, Plasmopara viticola und Botrytis cinerea.

Beispielhaft, aber nicht begrenzend, seien einige Erreger von pilzlichen und bakteriellen Erkrankungen, die unter die oben aufgezählten Oberbegriffe fallen, genannt:
Fungizide lassen sich im Pflanzenschutz zur Bekämpfung von Plasmodiophoromycetes, Oomycetes, Chytridiomycetes, Zygomycetes, Ascomycetes, Basidiomycetes und Deuteromycetes einsetzen.
Bakterizide lassen sich im Pflanzenschutz zur Bekämpfung von Pseudomonadaceae, Rhizobiaceae, Enterobacteriaceae, Corynebacteriaceae und Streptomycetaceae einsetzen.
Erkrankungen, hervorgerufen durch Erreger des Echten Mehltaus wie z.B.
Blumeria-Arten, wie beispielsweise Blumeria graminis;
Podosphaera-Arten, wie beispielsweise Podosphaera leucotricha;
Sphaerotheca-Arten, wie beispielsweise Sphaerotheca fuliginea;
Uncinula-Arten, wie beispielsweise Uncinula necator;
Erkrankungen, hervorgerufen durch Erreger von Rostkrankheiten wie z.B.
Gymnosporangium-Arten, wie beispielsweise Gymnosporangium sabinae
Hemileia-Arten, wie beispielsweise Hemileia vastatrix;
Phakopsora-Arten, wie beispielsweise Phakopsora pachyrhizi und Phakopsora meibomiae;
Puccinia-Arten, wie beispielsweise Puccinia recondita;
Uromyces-Arten, wie beispielsweise Uromyces appendiculatus;
Erkrankungen, hervorgerufen durch Erreger der Gruppe der Oomyceten wie z.B.
Bremia-Arten, wie beispielsweise Bremia lactucae;
Peronospora-Arten, wie beispielsweise Peronospora pisi oder P. brassicae;
Phytophthora-Arten, wie beispielsweise Phytophthora infestans;
Plasmopara-Arten, wie beispielsweise Plasmopara viticola;
Pseudoperonospora-Arten, wie beispielsweise Pseudoperonospora humuli oder
Pseudoperonospora cubensis;
Pythium-Arten, wie beispielsweise Pythium ultimum;
Blattfleckenkrankheiten und Blattwelken, hervorgerufen durch z.B.
Alternaria-Arten, wie beispielsweise Alternaria solani;
Cercospora-Arten, wie beispielsweise Cercospora beticola;
Cladiosporum-Arten, wie beispielsweise Cladiosporium cucumerinum;
Cochliobolus-Arten, wie beispielsweise Cochliobolus sativus
(Konidienform: Drechslera, Syn: Helminthosporium);
Colletotrichum-Arten, wie beispielsweise Colletotrichum lindemuthanium;
Cycloconium-Arten, wie beispielsweise Cycloconium oleaginum;
Diaporthe-Arten, wie beispielsweise Diaporthe citri;
Elsinoe-Arten, wie beispielsweise Elsinoe fawcettii;
Gloeosporium-Arten, wie beispielsweise Gloeosporium laeticolor;
Glomerella-Arten, wie beispielsweise Glomerella cingulata;
Guignardia-Arten, wie beispielsweise Guignardia bidwelli;
Leptosphaeria-Arten, wie beispielsweise Leptosphaeria maculans;
Magnaporthe-Arten, wie beispielsweise Magnaporthe grisea;
Mycosphaerella-Arten, wie beispielsweise Mycosphaerelle graminicola;
Phaeosphaeria-Arten, wie beispielsweise Phaeosphaeria nodorum;
Pyrenophora-Arten, wie beispielsweise Pyrenophora teres;
Ramularia-Arten, wie beispielsweise Ramularia collo-cygni;
Rhynchosporium-Arten, wie beispielsweise Rhynchosporium secalis;
Septoria-Arten, wie beispielsweise Septoria apii;
Typhula-Arten, wie beispielsweise Typhula incarnata;
Venturia-Arten, wie beispielsweise Venturia inaequalis;
Wurzel- und Stengelkrankheiten, hervorgerufen durch z.B.
Corticium-Arten, wie beispielsweise Corticium graminearum;
Fusarium-Arten, wie beispielsweise Fusarium oxysporum;
Gaeumannomyces-Arten, wie beispielsweise Gaeumannomyces graminis;
Rhizoctonia-Arten, wie beispielsweise Rhizoctonia solani;
Tapesia-Arten, wie beispielsweise Tapesia acuformis;
Thielaviopsis-Arten, wie beispielsweise Thielaviopsis basicola;
Ähren- und Rispenerkrankungen (inklusive Maiskolben), hervorgerufen durch z.B.
Alternaria-Arten, wie beispielsweise Alternaria spp.;
Aspergillus-Arten, wie beispielsweise Aspergillus flavus;
Cladosporium-Arten, wie beispielsweise Cladosporium spp.;
Claviceps-Arten, wie beispielsweise Claviceps purpurea;
Fusarium-Arten, wie beispielsweise Fusarium culmorum;
Gibberella-Arten, wie beispielsweise Gibberella zeae;
Monographella-Arten, wie beispielsweise Monographella nivalis;
Erkrankungen, hervorgerufen durch Brandpilze wie z.B.
Sphacelotheca-Arten, wie beispielsweise Sphacelotheca reiliana;
Tilletia-Arten, wie beispielsweise Tilletia caries;
Urocystis-Arten, wie beispielsweise Urocystis occulta;
Ustilago-Arten, wie beispielsweise Ustilago nuda;
Fruchtfäule hervorgerufen durch z.B.
Aspergillus-Arten, wie beispielsweise Aspergillus flavus;
Botrytis-Arten, wie beispielsweise Botrytis cinerea;
Penicillium-Arten, wie beispielsweise Penicillium expansum;
Sclerotinia-Arten, wie beispielsweise Sclerotinia sclerotiorum;
Verticilium-Arten, wie beispielsweise Verticilium alboatrum;
Samen- und bodenbürtige Fäulen und Welken, sowie Sämlingserkrankungen, hervorgerufen durch z.B.
Fusarium-Arten, wie beispielsweise Fusarium culmorum;
Phytophthora Arten, wie beispielsweise Phytophthora cactorum;
Pythium-Arten, wie beispielsweise Pythium ultimum;
Rhizoctonia-Arten, wie beispielsweise Rhizoctonia solani;
Sclerotium-Arten, wie beispielsweise Sclerotium rolfsii;
Krebserkrankungen, Gallen und Hexenbesen, hervorgerufen durch z.B.
Nectria-Arten, wie beispielsweise Nectria galligena;
Welkeerkrankungen hervorgerufen durch z.B.
Monilinia-Arten, wie beispielsweise Monilinia laxa;
Deformationen von Blättern, Blüten und Früchten, hervorgerufen durch z.B.
Taphrina-Arten, wie beispielsweise Taphrina deformans;
Degenerationserkrankungen holziger pflanzen, hervorgerufen durch z.B.
Esca-Arten, wie beispielsweise Phaemoniella clamydospora;
Blüten- und Samenerkrankungen, hervorgerufen durch z.B.
Botrytis-Arten, wie beispielsweise Botrytis cinerea;
Erkrankungen von Pflanzenknollen, hervorgerufen durch z.B.
Rhizoctonia-Arten, wie beispielsweise Rhizoctonia solani;
Erkrankungen, hervorgerufen durch bakterielle Erreger wie z.B.
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;
Bevorzugt können die folgenden Krankheiten von Soja-Bohnen bekämpft werden:
Pilzkrankheiten an Blättern, Stängeln, Schoten und Samen verursacht durch z.B.

Alternaria leaf spot (Alternaria spec. atrans tenuissima), Anthracnose (Colletotrichum gloeosporoides dematium var. truncatum), Brown spot (Septoria glycines), Cercospora leaf spot and blight (Cercospora kikuchii), Choanephora leaf blight (Choanephora infundibulifera trispora (Syn.)), Dactuliophora leaf spot (Dactuliophora glycines), Downy Mildew (Peronospora manshurica), Drechslera blight (Drechslera glycini), Frogeye Leaf spot (Cercospora sojina), Leptosphaerulina Leaf Spot (Leptosphaerulina trifolii), Phyllostica Leaf Spot (Phyllosticta sojaecola), Powdery Mildew (Microsphaera diffusa), Pyrenochaeta Leaf Spot (Pyrenochaeta glycines), Rhizoctonia Aerial, Foliage, and Web Blight (Rhizoctonia solani), Rust (Phakopsora pachyrhizi), Scab (Sphaceloma glycines), Stemphylium Leaf Blight (Stemphylium botryosum), Target Spot (Corynespora cassiicola).

Pilzkrankheiten an Wurzeln und der Stängelbasis verursacht durch z.B.

Black Root Rot (Calonectria crotalariae), Charcoal Rot (Macrophomina phaseolina), Fusarium Blight or Wilt, Root Rot, and Pod and Collar Rot (Fusarium oxysporum, Fusarium orthoceras, Fusarium semitectum, Fusarium equiseti), Mycoleptodiscus Root Rot (Mycoleptodiscus terrestris), Neocosmospora (Neocosmopspora vasinfecta), Pod and Stem Blight (Diaporthe phaseolorum), Stem Canker (Diaporthe phaseolorum var. caulivora), Phytophthora Rot (Phytophthora megasperma), Brown Stem Rot (Phialophora gregata), Pythium Rot (Pythium aphanidermatum, Pythium irregulare, Pythium debaryanum, Pythium myriotylum, Pythium ultimum), Rhizoctonia Root Rot, Stem Decay, and Damping-Off (Rhizoctonia solani), Sclerotinia Stem Decay (Sclerotinia sclerotiorum), Sclerotinia Southern Blight (Sclerotinia rolfsii), Thielaviopsis Root Rot (Thielaviopsis basicola).

Dabei lassen sich die erfindungsgemäßen Wirkstoffkombinationen mit besonders gutem Erfolg zur Bekämpfung von Getreidekrankheiten, wie z.B. gegen Puccinia-Arten und von Krankheiten im Wein-, Obst-und Gemüseanbau, wie z.B. gegen Botrytis-, Venturia- oder Alternaria-Arten, einsetzen.

Darüber hinaus weisen die erfindungsgemäßen Wirkstoffkombinationen auch sehr gute antimykotische Wirkungen auf. Sie besitzen ein sehr breites antimykotisches Wirkungsspektrum, insbesondere gegen Dermatophyten und Sprosspilze, Schimmel und diphasische Pilze (z.B. gegen Candida-Spezies wie Candida albicans, Candida glabrata) sowie Epidermophyton floccosum, Aspergillus-Spezies wie Aspergillus niger und Aspergillus fumigatus, Trichophyton-Spezies wie Trichophyton mentagrophytes, Microsporon-Spezies wie Microsporon canis und audouinii. Die Aufzählung dieser Pilze stellt keinesfalls eine Beschränkung des erfassbaren mykotischen Spektrums dar, sondern hat nur erläuternden Charakter.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltene Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten werden (Genetic Modified Organisms), und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus *Bacillus thuringiensis* (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD^{®} (z.B. Mais, Baumwolle, Soja), KnockOut^{®} (z.B. Mais), StarLink^{®} (z.B. Mais), Bollgard^{®} (Baumwolle), Nucotn^{®} (Baumwolle) und NewLeaf^{®} (Kartoffel) vertrieben werden. Als Beispiele für Herbizid tolerante Pflanzen seien Maissorten, Baumwollsorten und Sojasorten genannt, die unter den Handelsbezeichnungen Roundup Ready^{®} (Toleranz gegen Glyphosate z.B. Mais, Baumwolle, Soja), Liberty Link^{®} (Toleranz gegen Phosphinotricin, z.B. Raps), IMI^{®} (Toleranz gegen Imidazolinone) und STS^{®} (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield^{®} vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die Halogen-substituierten Verbindungen der Formel (I) und die oben genannten erfindungsgemäß zu verwendenden Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Die vorliegende Erfindung betrifft daher weiterhin Formulierungen und daraus bereitete Anwendungsformen als Pflanzenschutzmittel und/oder Schädlingsbekämpfungsmittel wie z. B. Drench-, Drip- und Spritzbrühen, umfassend mindestens einen der erfindungsgemäßen Wirkstoffe. Gegebenenfalls enthalten die Anwendungsformen weitere Pflanzenschutzmittel und/oder Schädlingsbekämpfungsmittel und/oder die Wirkung verbessernde Adjuvantien wie Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl- oder Sojaölmethylester oder Alkanol-alkoxylate und/oder Spreitmittel wie beispielsweise Alkylsiloxane und/oder Salze z.B. organische oder anorganische Ammonium- oder Phosphomiumsalze wie beispielsweise Ammoniumsulfat oder Diammonium-hydrogenphosphat und /oder die Retention fördernde Mittel wie z. B. Dioctylsulfosuccinat oder Hydroxypropyl-guar Polymere und/oder Humectants wie z.B. Glycerin und /oder Dünger wie beispielsweise Ammonium-, Kalium- oder Phosphor-enthaltende Dünger.

Übliche Formulierungen sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben. Gegebenenfalls enthalten die Formulierungen neben einem oder mehreren erfindungsgemäßen Wirkstoffen weitere agrochemische Wirkstoffe.

Vorzugsweise handelt es sich um Formulierungen oder Anwendungsformen, welche Hilfsstoffe, wie beispielsweise Streckmittel, Lösemittel, Spontanitätsförderer, Trägerstoffe, Emulgiermittel, Dispergiermittel, Frostschutzmittel, Biozide, Verdicker und/oder weitere Hilfsstoffe, wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z.B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z.B. gebrauchsfähigen Pflanzenschutzmitteln wie Spritzbrühen oder Saatgutbeizen) besondere Eigenschaften, wie bestimmte physikalische, technische und/oder biologische Eigenschaften, zu verleihen.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösemittel verwendet werden. Als flüssige Lösemittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösemittel wie Dimethylformamid und Dimethylsulfoxid, sowie Wasser.

Grundsätzlich können alle geeigneten Lösemittel verwendet werden. Geeignete Lösemittel sind beispielsweise aromatische Kohlenwasserstoffe, wie z.B. Xylol, Toluol oder Alkylnaphthaline, chlorierte aromatische oder aliphatische Kohlenwasserstoffe, wie z.B. Chlorbenzol, Chlorethylen, oder Methylenchlorid, aliphatische Kohlenwasserstoffe, wie z.B. Cyclohexan, Paraffine, Erdölfraktionen, mineralische und pflanzliche Öle, Alkohole, wie z.B. Methanol, Ethanol, iso-Propanol, Butanol oder Glykol sowie deren Ether und Ester, Ketone wie z.B. Aceton, Methylethylketon, Methylisobutylketon oder Cyclohexanon, stark polare Lösemittel, wie Dimethylsulfoxid, sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen, und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoff und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Nähr- und Spurennährstoffe, wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten, wie Gummiarabikum, Polyvinylalkohol, Polyvinylacetat, sowie natürliche Phospholipide, wie Kephaline und Lecithine, und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel. Im Allgemeinen können die Wirkstoffe mit jedem festen oder flüssigen Zusatzstoff, welcher für Formulierungszwecke gewöhnlich verwendet wird, kombiniert werden.

Als Retentionsförderer kommen alle diejenigen Substanzen in Betracht, die die dynamische Oberflächenspannung verringern, wie beispielsweise Dioctylsulfosuccinat, oder die die Visko-Elastizität erhöhen, wie beispielsweise Hydroxypropyl-guar Polymere.

Als Penetrationsförderer kommen im vorliegenden Zusammenhang alle diejenigen Substanzen in Betracht, die üblicherweise eingesetzt werden, um das Eindringen agrochemischer Wirkstoffe in Pflanzen zu verbessern. Penetrationsförderer werden in diesem Zusammenhang dadurch definiert, dass sie aus der (in der Regel wässrigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate, wie beispielsweise Kokosfettethoxylat (10) oder Isotridecylethoxylat (12), Fettsäureester wie beispielsweise Rapsöl- oder Sojaölmethylester, Fettaminalkoxylate, wie beispielsweise Tallow Amine Ethoxylat (15), oder Ammonium und / oder Phosphonium-Salze, wie beispielsweise Ammoniumsulfat oder Diammonium-hydrogenphosphat.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die erfindungsgemäße Anwendung der Halogen-substituierten Verbindungen der Formel (I) bzw. der oben genannten erfindungsgemäß zu verwendenden Wirkstoffkombinationen erfolgt durch Angiessen auf den Boden bzw. Bodenmischung, Furchenbehandlung, in hydroponischen oder Bewässerungssystemen, als Tröpfchenapplikation auf den Boden oder andere Substrate, durch Boden-, Stamm- oder Blüteninjektion, durch Pflanzlochbehandlung oder durch Tauchapplikation, z. Bsp. von Vermehrungsmaterial wie Zwiebeln, Knollen oder Wurzeln, Floating - oder Saatboxapplikation sowie, insbesondere bei Saatgut, durch ein- oder mehrschichtiges Umhüllen.

Eine bevorzugte Ausführungsform der vorliegenden Erfindung betrifft die Behandlung von Saatgut mit Verbindungen der Formel (I) bzw. mit den oben genannten erfindungsgemäß zu verwendenden Wirkstoffkombinationen. Ein großer Teil des durch Schädlinge verursachten Schadens an Kulturpflanzen entsteht bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch die Anwendung geeigneter Mittel zu schützen.

Die Bekämpfung von Schädlingen durch die Behandlung des Saatguts von Pflanzen ist im Prinzip seit langem bekannt. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einem erfindungsgemäß zu verwendenden Wirkstoff behandelt wird. Die Erfindung bezieht sich daher auch auf die Verwendung von Halogen-substituierten Verbindungen der Formel (I) zur Behandlung von Saatgut. Diese bewirkt den Schutz des Saatguts und der daraus entstehenden Pflanze vor Schädlingen. Weiterhin bezieht sich die Erfindung auf Saatgut, welches zum Schutz vor Schädlingen erfindungsgemäß mit einer oder mehreren Verbindungen der Formel (I) behandelt wurde.

Einer der Vorteile der vorliegenden Erfindung ist es, dass aufgrund der ausgeprägten systemischen Eigenschaften der Halogen-substituierten Verbindungen der Formel (I) die Behandlung des Saatguts mit diesen Wirkstoffen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ebenso ist es als vorteilhaft anzusehen, dass erfindungsgemäß die Halogen-substituierten Verbindungen der Formel (I) insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts können bestimmte Schädlinge bereits durch die Expression des z.B. insektiziden Proteins kontrolliert werden, und zusätzlich durch die Wirkstoffe der Formel (I) vor Schäden bewahrt werden.

Die erfindungsgemäße Anwendung der Halogen-substituierten Verbindungen der Formel (I) eignet sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die Verbindungen der Formel (I) eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen, Reis, Canola und Raps zu.

Wie vorstehend bereits erwähnt, kommt auch der Behandlung von transgenem Saatgut mit erfindungsgemäßen Wirkstoffen eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie *Bacillus*, *Rhizobium*, *Pseudomonas*, *Serratia, Trichoderma*, *Clavibacter*, *Glomus* oder *Gliocladium* stammen. Die vorliegende Erfindung eignet sich besonders für die Behandlung von transgenem Saatgut, das zumindest ein heterologes Gen enthält, das aus *Bacillus sp.* stammt und dessen Genprodukt Wirksamkeit gegen Maiszünsler und/oder Maiswurzel-Bohrer zeigt. Besonders bevorzugt handelt es sich dabei um ein heterologes Gen, das aus *Bacillus thuringiensis* stammt.

### Anwendungsbeispiele

Die folgenden Beispiele erläutern die Erfindung ohne sie in irgendeiner Weise zu limitieren.

### Beispiel A

### Saatgutapplikation: Saugende Schädlinge

Lösungsmittel: 7 Gewichtsteile Dimethylformamid

Emulgator: 10 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Das gewünschte Saatgut wird mit der Wirkstoffzubereitung gebeizt und in Erde ausgesät. Nach Erreichen des 2-Blattstadiums werden die Pflanzen mit Blattläusen bzw. Blattwanzen infiziert.

Nach der angegebenen Zeit wird die Wirkung in % bestimmt. Dabei bedeutet 100 %, dass alle Schädlinge abgetötet wurden; 0 % bedeutet, dass keine Schädlinge abgetötet wurden.

Bei diesem Test zeigte z. B. die folgende Verbindung der Herstellungsbeispiele gute Wirksamkeit:

**Tabelle A: Saatgutapplikation (Gewächshaus)**

| **Wirkstoff** | **Konzentration in g/kg Saat** | **Myzus persicae auf Ackerbohne Wirkung in %, 7 Tage nach Infektion** |
|---|---|---|
| **Verbindung der Formel (I-4)** | 2 | 100 |

| **Wirkstoff** | **Konzentration in g/kg Saat** | **Rhopalosiphum padi auf Gerste Wirkung in %, 7 Tage nach Infektion** |
|---|---|---|
| **Verbindung der Formel (I-4)** | 0,7 | 100 |

| **Wirkstoff** | **Konzentration in g/Einheit Saat** | **Aphis fabae auf Zuckerrübe Wirkung in %, 7 Tage nach Infektion** |
|---|---|---|
| **Verbindung der Formel (I-4)** | 8 | 100 |

| **Wirkstoff** | **Konzentration in g/kg Saat** | **Lygus hesperus auf Baumwolle Wirkung in %, 7 Tage nach Infektion** |
|---|---|---|
| **Verbindung der Formel (I-4)** | 4 | 100 |

### Beispiel B

### Saatgutapplikation - Gewächshaus: Vergleich mit Stand der Technik

Zur Herstellung einer zweckmäßigen Anwendungslösung vermischt man die formulierte Ware mit Wasser auf die gewünschte Konzentration.

Baumwollsaatgut (*Gossypium hirsutum*) wird mit der Wirkstoffzubereitung gebeizt und in Erde ausgesät. 4 Wochen nach der Aussaat werden die Pflanzen mit der Baumwollblattlaus (*Aphis gossypii*) infiziert.

Nach der angegebenen Zeit wird die Wirkung in % bestimmt. Dabei bedeutet 100 %, dass alle Schädlinge abgetötet wurden; 0 % bedeutet, dass keine Schädlinge abgetötet wurden.

Bei diesem Test zeigte z. B. die folgende Verbindung der Herstellungsbeispiele überlegene Wirksamkeit gegenüber dem Stand der Technik:

**Tabelle B: Aphis gossypii - Saatgutapplikation (Gewächshaus)**

| **Wirkstoff / Formulierung** | **Konzentration in g/kg Saat** | **Aphis gossypii auf Baumwolle Wirkung in %, 7 Tage nach Infektion** |
|---|---|---|
| **Verbindung der Formel (I-4) / SL 200** | 0,125 | 96 |
| **Acetamiprid / SL 200** | 0,125 | 0 |
| **Imidacloprid / SL 200** | 0,125 | 63 |

### Beispiel C

### Saatgutapplikation

Testinsekt: **Diabrotica balteata - Larven im Boden**

Testpflanze: Körnermais

Lösungsmittel: 7 Gewichtsteile Dimethylformamid

Emulgator: 10 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Maissaatgut wird mit der Wirkstoffzubereitung gebeizt und in Erde ausgesät. Nach 3 Tagen werden pro Topf ca. 40 Larven des Maiswurzelbohrers (*Diabrotica balteata*) aufgesetzt.

Nach der gewünschten Zeit wird die Wirkung in % bestimmt. Der Wirkungsgrad berechnet sich aus der Anzahl der aufgelaufenen Maispflanzen im Vergleich zur Kontrolle.

Bei diesem Test zeigte z. B. die folgende Verbindung der Herstellungsbeispiele gute Wirksamkeit:

**Tabelle C: Saatgutapplikation Diabrotica balteata - Test**

| **Wirkstoff** | **Konzentration in g/kg Saatgut** | **Diabrotica balteata (Larven) auf Mais Wirkung in %, 7 Tage nach Infektion** |
|---|---|---|
| **Verbindung der Formel (I-4)** | 4 | 100 |

### Beispiel D

### Diabrotica balteata -Test, Larven im Boden (Bodenapplikation)

Lösungsmittel: 4 Gewichtsteile Aceton

Emulgator: 1 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Die Wirkstoffzubereitung wird mit Erde vermischt. Die angegebene Konzentration bezieht sich auf die Wirkstoffmenge pro Volumeneinheit Boden (mg/l = ppm). Man füllt den behandelten Boden in Töpfe und legt je Topf 5 Maiskörner aus. 3 Tage nach Aussaat werden Larven des Maiswurzelbohrers (*Diabrotica balteata*) in den behandelten Boden gesetzt.

Nach der gewünschten Zeit wird die Wirkung in % bestimmt. Der Wirkungsgrad berechnet sich aus der Anzahl der aufgelaufenen Maispflanzen.

Bei diesem Test zeigte z. B. die folgende Verbindungen der Herstellungsbeispiele gute Wirksamkeit:

**Tabelle D: Bodenmischung Diabrotica balteata - Test**

| **Wirkstoff** | **Konzentration in ppm** | **Diabrotica balteata (Larven) auf Mais Wirkung in %, 7 Tage nach Infektion** |
|---|---|---|
| **Verbindung der Formel (I-4)** | 4 | 100 |

### Beispiel E

### Bemisia tabaci -Test (Bodenapplikation)

Lösungsmittel: 4 Gewichtsteile Aceton

Emulgator: 1 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Die Wirkstoffzubereitung wird mit Erde vermischt. Die angegebene Konzentration bezieht sich auf die Wirkstoffmenge pro Volumeneinheit Boden (mg/l = ppm). Man füllt den behandelten Boden in Töpfe und bepflanzt ihn mit einer Baumwollpflanze (*Gossypium hirsutum*). Nach einer Woche wird mit Adulten der Weißen Fliege (*Bemisia tabaci*) zur Eiablage infiziert.

Nach der gewünschten Zeit wird die Wirkung in % bestimmt. Dabei bedeutet 100 %, dass alle Eier bzw. Larven abgetötet wurden; 0 % bedeutet, dass keine Eier bzw. Larven abgetötet wurden.

Bei diesem Test zeigte z. B. die folgende Verbindungen der Herstellungsbeispiele gute Wirksamkeit:

**Tabelle E: Bodenmischung Bemisia tabaci - Test**

| **Wirkstoff** | **Konzentrationin ppm** | **Bemisia tabaci auf BaumwolleWirkung in %, 3 Wochen nach Infektion** |
|---|---|---|
| **Verbindung der Formel (I-4)** | 4 | 99 |

### Beispiel F

### Drench - Applikation

Lösungsmittel: 7 Gewichtsteile Dimethylformamid

Emulgator: 1 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Baumwollpflanzen (*Gossypium hirsutum*) werden mit der Wirkstoffzubereitung in der gewünschten Konzentration angegossen und mit dem gewünschten Schädling infiziert.

Nach der gewünschten Zeit wird die Wirkung in % bestimmt. Dabei bedeutet 100 %, dass alle Tiere abgetötet wurden; 0 % bedeutet, dass keine Tiere abgetötet wurden.

Bei diesem Test zeigte z. B. die folgende Verbindung der Herstellungsbeispiele gute Wirksamkeit:

**Tabelle F: Drench - Applikation**

| **Wirkstoff** | **Konzentrationin mg/Pflanze** | **Frankliniella occidentalis auf BaumwolleWirkung in %, 2 Wochen nach Infektion** |
|---|---|---|
| **Verbindung der Formel (I-4)** | 4 | 100 |

| **Wirkstoff** | **Konzentrationin mg/Pflanze** | **Lygus hesperus auf BaumwolleWirkung in %, 1 Woche nach Infektion** |
|---|---|---|
| **Verbindung der Formel (I-4)** | 4 | 100 |

### Beispiel G

### Drench - Applikation: Vergleich mit Stand der Technik

Zur Herstellung einer zweckmäßigen Anwendungslösung vermischt man die formulierte Ware mit Wasser auf die gewünschte Konzentration.

Kohlpflanzen (*Brassica oleracea*) werden mit der Wirkstoffzubereitung in der gewünschten Konzentration angegossen und nach 2 Wochen mit Larven des Meerrettichkäfers (*Phaedon cochleariae*) infiziert.

Nach der angegebenen Zeit wird die Wirkung in % bestimmt. Dabei bedeutet 100 %, dass kein Fraßschaden an der Pflanze der Schädlinge beobachtet werden konnte; 0 % bedeutet, dass die behandelte Pflanze einen mit der Kontrolle vergleichbaren Fraßschaden aufweist.

Bei diesem Test zeigte z. B. die folgende Verbindung der Herstellungsbeispiele überlegene Wirksamkeit gegenüber dem Stand der Technik:

**Tabelle G: Phaedon cochleariae - Drench - Applikation**

| **Wirkstoff / Formulierung** | **Konzentrationin mg /Pflanze** | **Phaedon cochleariae auf WirsingkohlWirkung in %, 7 Tage nach Infektion** |
|---|---|---|
| **Verbindung der Formel (I-4) / SL 200** | 4 | 88 |
| **Acetamiprid / SL 200** | 4 | 45 |

## Patentansprüche

1. Verwendung von Verbindungen der Formel (I) 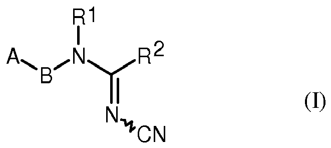 in welcher
A für jeweils gegebenenfalls substituiertes Aryl, Heterocyclyl oder Hetaryl steht, welche gegebenenfalls durch Fluor, Chlor, Brom, Iod, Cyano, Nitro, Alkyl (welches gegebenenfalls durch Fluor und/oder Chlor substituiert ist), Alkylthio (welches gegebenenfalls durch Fluor und/oder Chlor substituiert ist), oder Alkylsulfonyl (welches gegebenenfalls durch Fluor und/oder Chlor substituiert ist), substituiert sind,
R¹ für jeweils halogensubstituiertes C₂-C₄-Alkyl, C₂-C₅-Alkenyl oder C₃-C₅-Cycloalkyl steht,
R² für jeweils gegebenenfalls halogensubstituiertes Alkyl oder Cycloalkyl steht,
B für gegebenenfalls substituiertes Methylen oder jeweils gegebenenfalls substituiertes Alkylen oder Alkyliden mit jeweils 2 bis 6 Kohlenstoffatomen steht, oder eine Bindung zwischen A und NR¹ bedeutet. zur Bekämpfung von tierischen Schädlingen wie Insekten und/oder Spinnmilben und/oder Nematoden und/oder Mollusken, wobei die Applikation des Wirkstoffes durch Bodenmischung, Tröpfchenapplikation, in hydroponischen Systemen, durch Pflanzlochbehandlung, Boden-, Stamm- oder Blüteninjektion, durch Tauchapplikation, Floating- oder Saatboxapplikation oder durch Behandlung von Saatgut geschieht.

2. Verwendung von Verbindungen der Formel (I) gemäß Anspruch 1, wobei
A für einen Rest aus der Reihe 6-Chlor-pyrid-3-yl, 6-Brom-pyrid-3-yl, 2-Methyl-pyrimidin-5-yl, 2-Chlor-pyrimid-5-yl, 3-Methyl-isoxazol-5-yl, 3-Brom-isoxazol-5-yl, 5-Fluor-6-chlor-pyrid-3-yl, 5,6-Dichlor-pyrid-3-yl, 5-Fluor-6-brom-pyrid-3-yl und 2-Chlor-1,3,-thiazol-5-yl steht,
R¹ für 2,2-Difluorethyl steht,
R² für Methyl steht und
B für -CH₂- steht.

3. Verwendung von Verbindungen der Formel (I-1) gemäß einem der Ansprüche 1 oder 2, wobei die Verbindung der Formel (I) zusätzlich mit einem Wirkstoff ausgewählt aus der Reihe Clothianidin, Imidacloprid, Thiamethoxam, Thiacloprid, Acetamiprid, ß-Cyfluthrin, Tefluthrin, Methiocarb, Thiodicarb, das Isomerengemisch (1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid und 1-(3-Chlorpyridin-2-yl)-*N*-[4-cyan-2-methyl-6-(methylcarbamoyl)phenyl]-3-{[5-(trifluormethyl)-2H-tetrazol-2-yl]methyl}-1H-pyrazol-5-carboxamid), 4-{[(6-chloropyridin-3-yl)methyl](2,2-difluoroethyl)amino}furan-2(5H)-one, 1-{2-fluoro-4-methyl-5-[(2,2,2-trifluorethyl)sulfinyl]phenyl}-3-(trifluoromethyl)-1H-1,2,4-triazol-5-amine, Bacillus firmus 1-1582, Spinosad, Spinetoram, Abamectin, Flubendiamide, Chlorantraniliprole, Cyantraniliprole, Sulfoxaflor, Flonicamid, Fluopyram, Imicyafos, Fluensulfone, Spirotetramat, Fipronil und Pymetrozine kombiniert wird.

4. Verwendung gemäß einem der Ansprüche 1 bis 3, wobei die zu behandelnde Pflanze in einem artifiziellen Wachstumssubstrat angezogen wird.

5. Verwendung gemäß einem der Ansprüche 1 bis 3, wobei die zu behandelnde Pflanze in einem geschlossenen System gepflanzt ist.

6. Verwendung gemäß einem der Ansprüche 1 bis 3, wobei die zu behandelnde Pflanze ausgewählt ist aus der Gruppe bestehend aus Ackerkulturen, Gemüsen, Gewürzen, Zierpflanzen, Sträucher, Koniferen, Obstbäumen, Zitruspflanzen.

7. Verwendung gemäß einem der Ansprüche 1 bis 3 zur Behandlung von Saatgut.

8. Verwendung gemäß einem der Ansprüche 1 bis 3 zur Behandlung von Saatgut transgener Pflanzen.

9. Wirkstoffkombination enthaltend die Verbindung der Formel (1-4) 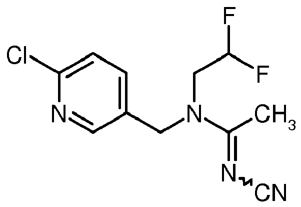 und eine Verbindung ausgewählt aus der Reihe (1-(3-Chlorpyridin-2-yl)-*N*-[4-cyan-2-methyl-6-(methylcarbamoyl)phenyl]-3-{[5-(trifluormethyl)-1*H*-tetrazol-1-yl]methyl}-1*H*-pyrazol-5-carboxamid und 1-(3-Chlorpyridin-2-yl)-*N*-[4-cyan-2-methyl-6-(methylcarbamoyl)phenyl]-3-{[5-(trifluormethyl)-2*H*-tetrazol-2-yl]methyl}-1*H*-pyrazol-5-carboxamid), *Bacillus firmus* I - 1582, Fluopyram, Imicyafos, Fluensulfone und 1-{2-fluoro-4-methyl-5-[(2,2,2-trifluorethyl)sulfinyl]phenyl}-3-(trifluoromethyl)-1*H*-1,2,4-triazol-5-amine.
